# EUROPÄISCHE PATENTSCHRIFT

(11) **EP 2 443 037 B1**
(45) Veröffentlichungstag und Bekanntmachung des Hinweises auf die Patenterteilung: **08.03.2017**
(21) Anmeldenummer: 10734644.7
(22) Anmeldetag: 09.06.2010
(51) Int. Cl.: B64F 1/12, B64F 1/00, B64F 1/22

(54) **LUFTFAHRZEUG-TRANSFERSYSTEM**
AIRCRAFT TRANSFER SYSTEM
SYSTÈME DE TRANSFERT D'UN AÉRONEF

(30) Priorität: 17.06.2009 DE 102009025650
(43) Veröffentlichungstag der Anmeldung: 25.04.2012
(73) Patentinhaber: Robert Bosch GmbH, 70469 Stuttgart (DE)
(72) Erfinder: VAN DEN BERG, Wilberth, NL-Lennisheuvel (NL); SCHALKX, Maarten, NL-Liempde (NL)
(74) Vertreter: Thürer, Andreas
(86) Internationale Anmeldenummer: PCT/DE2010/000650
(87) Internationale Veröffentlichungsnummer: WO 2010/145638

(56) Entgegenhaltungen:
- EP-A1- 0 227 229
- EP-A1- 0 709 287
- US-A- 3 830 452
- US-A- 4 319 722

## Beschreibung

Die Erfindung betrifft ein Luftfahrzeug-Transfersystem gemäß dem Oberbegriff des Patentanspruchs 1 und ein Verfahren zu dessen Betrieb gemäß Patentanspruch 19.

Nach dem ein Luftfahrzeug (z.B. ein Hubschrauber) auf einem bewegten Landeplatz (z.B. auf einem Schiff) gelandet ist, muss es möglichst schnell gesichert und oftmals danach in einen Hangar verschoben werden. Dabei besteht das Problem, dass der Hubschrauber in den seltensten Fällen an der optimalen Landeposition aufgesetzt wird, so dass eine gewisse Abholzone von dem Transfersystem abgedeckt werden muss, aus der der Hubschrauber abgeholt werden kann.

In der Druckschrift EP 0 894 716 A2 ist ein Transfersystem gezeigt, bei dem der Hubschrauber zunächst von seiner in der Abholzone liegenden Landeposition ausgehend in eine Ausgangslage manövriert werden muss, die durch eine vorbestimmte Position und Ausrichtung des Hubschraubers definiert ist. Erst nach Erreichen dieser Ausgangslage kann der Transfer in den Hangar über das Transfersystem gestartet werden.

Aus der US 4 319 722 a und aus der US 3 830 452 A sind Luftfahrzeug-Transfersysteme mit einer Brücke bekannt, die unterhalb des Luftfahrzeugs verschwenkt wird. Die Brücke ist in Längsrichtung einer Schiene zusammen mit einem Läufer verschiebbar.

Die Druckschrift EP 0 709 287 B1, die als nächstliegender Stand der Technik angesehen wird, offenbart ein Transfersystem mit zwei Schienen, die parallel von einen Hangar zur zwischen den beiden Schienen liegenden Abholzone des Hubschraubers verlaufen. Jede Schiene hat einen Läufer mit je einer Halbbrücke. Der Hubschrauber kann von verschiedenen Landepositionen der definierten Abholzone ausgehend in den Hangar verschoben werden. Dazu fahren die beiden Läufer mit den Halbbrücken entlang der jeweiligen Schiene zur Abholzone, wobei die beiden Halbbrücken entlang der Schienen ausgerichtet sind. Danach schwenken die beiden Halbbrücken unter den Hubschrauber, werden miteinander verbunden, greifen den Hubschrauber im Bereich seiner Räder und bewegen ihn in den Hangar.

Nachteilig an derartigen Luftfahrzeug-Transfersystemen ist der von den Halbbrücken benötigte Verschwenkbereich unter dem Luftfahrzeug.

Dem gegenüber liegt der Erfindung die Aufgabe zu Grunde, ein Luftfahrzeug-Transfersystem zu schaffen, das unter dem Luftfahrzeug minimalen Bewegungs- bzw. Aktionsraum benötigt.

Diese Aufgabe wird gelöst durch ein Luftfahrzeug-Transfersystem nach Patentanspruch 1 und durch ein Verfahren zum Betreiben eines Luftfahrzeug-Transfersystem gemäß Patentanspruch 14.

Das erfindungsgemäße Luftfahrzeug-Transfersystem dient zur Überführung eines in einer Abholzone angeordneten Luftfahrzeugs in eine Parkposition und hat eine erste Schiene und eine parallel zur ersten Schiene verlaufende, zweite Schiene. Weiterhin hat des Transfersystem einen auf der ersten Schiene verfahrbaren Hauptläufer, an den eine Brücke gekoppelt ist, die von dem Raum zwischen den beiden Schienen weg verschwenkbar und quer zur Schienenlängsrichtung über eine von einem Schneckenrad antreibbare Zahnstange verschiebbar ist. Damit ist ein Transfersystem geschaffen, das unter dem Luftfahrzeug minimalen Bewegungs- bzw. Aktionsraum benötigt.

Aus Gründen einer stabilen Abstützung der Brücke wird ein Hilfsläufer bevorzugt, der auf der sich parallel zur ersten Schiene erstreckenden, zweiten Schiene verfahren werden kann, wobei der Endabschnitt der Brücke mit dem Hilfsläufer gekoppelt werden kann. Dabei kann der Endabschnitt der Brücke einen in eine Ausnehmung des Hilfsläufers einführbaren Brückenzapfen haben.

Weitere vorteilhafte Ausgestaltungen der Erfindung sind in den abhängigen Patentansprüchen beschrieben.

Eine besonders bevorzugte Weiterbildung hat eine Brückenführung, die über ein Schwenkgelenk mit dem Hauptläufer verbunden ist, und in der die Brücke abschnittsweise aufgenommen und entlang ihrer Längsachse verschiebbar gelagert ist.

Eine bevorzugte Weiterbildung hat einen Spindeltrieb, der mit der Brückenführung und mit dem Hauptläufer über je ein Drehgelenk verbunden ist. Somit kann durch den Spindeltrieb die Brücke einfach schwenkbar und selbstblockierend ausgeführt werden.

Um den freien Endabschnitt der Brücke beim Verschieben zu stützen, wird es bevorzugt, wenn an ihm ein Stützrad befestigt ist. Dabei kann der Hilfsläufer einen ebenen Bereich haben, auf den das Stützrad gefahren werden kann, so dass die Brücke danach trotz des Stützrades widerstandsarm entlang der beiden Schienen verfahren werden kann.

Bei einem besonders bevorzugten Ausführungsbeispiel hat das erfindungsgemäße Transfersystem zwei von einem Hydromotor synchron angetriebene Winden, die in der Nähe der Parkposition angeordnet sind und jeweils über biegeschlaffe Zugmittel, z.B. Stahlseile, mit einem Läufer verbunden ist.

Vorzugsweise ist an der Brücke ein Greiferläufer befestigt und kann entlang dieser über einen Zahnriemen verfahren werden. Damit können auch Luftfahrzeuge abgeholt werden, die nicht ideal zwischen den Schienen stehen. Vielmehr wird etwa der gesamte Abstand zwischen den Schienen zur Abholzone, in der ein Abholen des Luftfahrzeugs möglich ist.

Bei einem bevorzugten Ausführungsbeispiel hat der Greiferläufer einen Greifer, der mit einem Zapfen des Luftfahrzeugs verbunden werden kann.

Zwischen dem Greifer und dem Greiferläufer ist vorzugsweise eine Höhenverstellung zur Einstellung des Greifers entlang oder etwa parallel einer Längsachse des Zapfens und somit zur Anpassung an die Positionen der Zapfen verschiedener Luftfahrzeuge vorgesehen.

Bei einem bevorzugten Ausführungsbeispiel hat die Höhenverstellung ein biegeschlaffes Zugmittel, über das der Greifer gegen die Kraft zweier zwischen dem Greiferläufer und dem Greifer angeordneter Federbeine absenkbar ist.

Dabei kann ein erster Endabschnitt des Zugmittels am Endabschnitt der Brücke befestigt sein, wobei am Greifer eine Umlenkrolle und am Greiferläufer zwei Umlenkrollen vorgesehen sind. Ein zweiter Endabschnitt des Zugmittels kann von einem Hydraulikzylinder mit einer Zugkraft beaufschlagt und entlang der Brücke bewegt werden.

Dabei wird es bevorzugt, wenn der Hydraulikzylinder einen von einem Kolben begrenzten Ringraum hat, der von einer Kolbenstange durchsetzt ist, an deren vom Kolben abgewandten Endabschnitt eine Umlenkrolle befestigt ist. Der zweite Endabschnitt des Zugmittels ist über die Umlenkrolle geführt und am Hydraulikzylinder oder am Hauptläufer befestigt. Damit ist eine Verdopplung der Seilkraft gegenüber der Kraft des Hydraulikzylinders gegeben.

Bei einem Ausführungsbeispiel des erfindungsgemäßen Transfersystems sind die beiden Winden an einem oberen Abschnitt einer etwa quer zu den Schienen angeordneten Wand des Hangars befestigt, und zwei Umlenkrollen sind an einem unteren Abschnitt der Wand angeordnet. Weiterhin sind zwei Umlenkrollen an den Abholabschnitten der Schienen vorgesehen, wobei die Zugmittel über die Umlenkrollen geführt sind. Damit ist ein platzsparender Antrieb für die Brücke des Transfersystems geschaffen.

Das erfindungsgemäße Verfahren zum Betreiben eines Luftfahrzeug-Transfersystem hat die Schritte:
- Bewegen der Brücke in die Nähe des Luftfahrzeugs;
- Schwenken der Brücke nach außen weg vom Luftfahrzeug oder von der Abholzone;
- zumindest abschnittsweises Verschieben der Brücke unter das Luftfahrzeug;
- Koppeln der Brücke mit dem Luftfahrzeug; und
- Bewegen der Brücke mit dem Luftfahrzeug zur Parkposition.

Damit ist ein Verfahren geschaffen, bei dem unterhalb des abzuholenden Luftfahrzeugs keine Verschwenkbewegung durchgeführt werden muss, und somit unterhalb des Luftfahrzeugs ein Minimum an Platz benötigt wird.

Bei einer besonders bevorzugten Weiterbildung des Verfahrens besteht das Koppeln der Brücke mit dem Luftfahrzeug aus den Schritten:
- Bewegen des Greiferläufers in Richtung zur Brückenführung;
- Bewegen der Brücke in Richtung zum Zapfen;
- Einführen des Zapfens in den Greifer über den Greiferläufer; und
- Schließen des Greifers.

Damit ist ein einfaches und sicheres Kopplungsverfahren zwischen dem Transfersystem und dem Luftfahrzeug geschaffen.

Das Schwenken der Brücke und / oder das Verschieben der Brücke und / oder das Bewegen des Greiferläufers kann auf einfache Weise über eine Handkurbel oder einen akkubetriebenen tragbaren Elektromotor erfolgen.

Bei einer bevorzugten Weiterbildung des Verfahrens erfolgt ein Ansetzen einer Deichsel an ein schwenkbares Rad des Luftfahrzeugs und an eine Steuerbrücke des Transfersystems, wobei während dem Bewegen der Brücke mit dem Luftfahrzeug zur Parkposition ein Steuern des Luftfahrzeugs über die Steuerbrücke und über die Deichsel erfolgt.

Vorzugsweise erfolgt nach dem Bewegen der Brücke in Richtung zum Zapfen zur Feineinstellung ein Aufwärtsbewegen des Greifers über die Höhenverstellung. Nach dem Schließen des Greifers erfolgt ein Abwärtsbewegen des Greifers, wobei Stifte des Zapfens mit dem Greifer verrasten.

Zur exakten Positionierung kann das Bewegen der Brücke in Richtung zum Zapfen und/oder das Aufwärtsbewegen des Greifers bis zu einem jeweiligen Anschlag erfolgen.

Als Voreinstellung wird es bevorzugt, wenn nach dem Verschieben der Brücke unter das Luftfahrzeug ein Voreinstellen der Höhe des Greifers in Richtung der Längsachse des Zapfens über die Höhenverstellung erfolgt.

Zur Abstützung der Brücke beim Verfahren das Luftfahrzeugs wird es besonders bevorzugt, wenn bei dem Verschieben der Brücke unter das Luftfahrzeug ein Durchführen ihres Endabschnitts unter dem Luftfahrzeug hindurch und danach ein Koppeln des Endabschnitts mit dem Hilfsläufer erfolgt.

Vorzugsweise erfolgt vor dem Bewegen der Brücke in die Nähe des Luftfahrzeugs ein Ausrichten der Brücke entlang der Schiene, damit beim Bewegen der Brücke der Platzbedarf der erfindungsgemäßen Transfersystems minimal ist.

Im Folgenden wird anhand der Figuren ein Ausführungsbeispiel der Erfindung detailliert beschrieben. Es zeigen:
Figur 1 ein erfindungsgemäßes Luftfahrzeug-Transfersystem in einer perspektivischen Ansicht;
Figur 2 einen Ausschnitt des Luftfahrzeug-Transfersystems in einer weiteren perspektivischen Ansicht;
Figur 3 einen Ausschnitt des Luftfahrzeug-Transfersystems während des Verschwenkens einer Brücke in einer Draufsicht;
Figur 4 einen Ausschnitt des Luftfahrzeug-Transfersystems am Ende des Verschwenkens der Brücke in einer Draufsicht;
Figur 5 einen Ausschnitt des Luftfahrzeug-Transfersystems während des Verfahrens der Brücke in einer Draufsicht;
Figur 6 einen Ausschnitt des Luftfahrzeug-Transfersystems in einer perspektivischen Ansicht;
Figur 7 einen Ausschnitt des Luftfahrzeug-Transfersystems in einer perspektivischen Ansicht;
Figur 8 einen Greiferläufer mit einem Greifer des Luftfahrzeug-Transfersystems in einer perspektivischen Ansicht;
Figur 9 einen Ausschnitt des Luftfahrzeug-Transfersystems in einer perspektivischen Ansicht; und
Figur 10 einen Ausschnitt des Luftfahrzeug-Transfersystems während des Verfahrens in einen Hangar in einer Draufsicht.

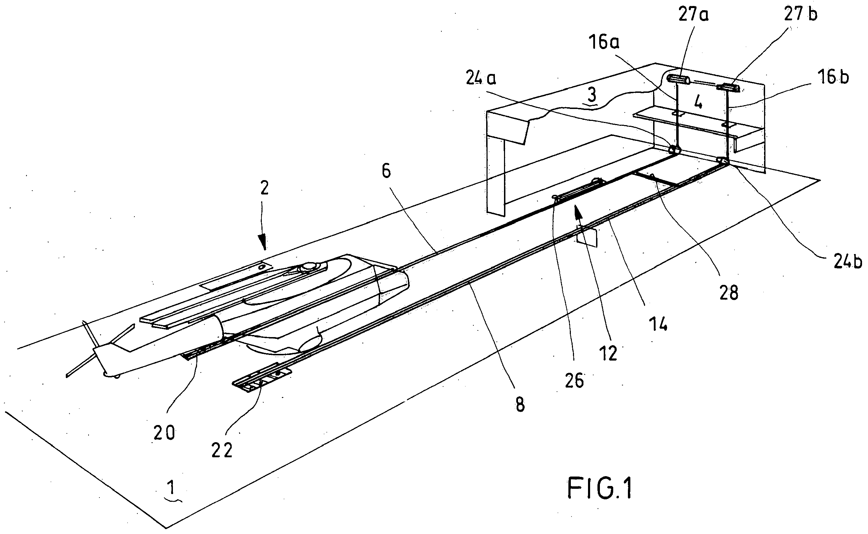

Figur 1 zeigt eine Landefläche 1 eines (nicht näher gezeigten) Schiffes, auf dem ein gelandeter Helikopter 2 mit zusammengeklappten Rotorblättern und ein Hangar 3 gezeigt sind, wobei der Hangars 3 aufgebrochen dargestellt ist. Er hat etwa die Form einer Garage, wobei eine der beiden kurzen Stirnflächen 4 geschlossen ist, während sich an der anderen Stirnseite eine Einfahrt für den Helikopter 2 befindet.

Von der Landefläche 1 erstrecken sich zwei parallele Schienen 6, 8 durch die Einfahrt des Hangars 3 bis zu dessen geschlossener Stirnseite 4. Die beiden Schienen 6, 8 sind derart in die Landefläche 1 bzw. in die Bodenfläche des Hangars 3 eingelassen, dass die jeweiligen Oberseiten flächig miteinander abschließen. Auf der Hauptschiene 6 ist ein Hauptläufer 26 mit einer Brücke 12 verfahrbar angeordnet, während auf der Hilfsschiene 8 ein Hilfsläufer 14 verfahrbar angeordnet ist.

Zwei umlaufende Seile 16a, 16b verlaufen mit einem ersten Abschnitt etwa parallel zu jeder Schiene 6, 8 und mit einem zweiten Abschnitt in etwa senkrechter Richtung entlang der Stirnseite 4 des Hangars 3. Jedem umlaufenden Seil 16a, 16b ist am landeflächenseitigen Endabschnitt der zugehörigen Schiene 6, 8 eine Umlenkrolle 20, 22 zugeordnet. Im Hangar 3 benachbart zur Stirnseite 4 ist zu jeder Schiene 6, 8 eine weitere Umlenkrolle 24a, 24b angeordnet.

Zur Überführung des Helikopters 2 in den Hangar 3 wird bei dem erfindungsgemäßen Luftfahrzeug-Transfersystem der Hauptläufer 26 und der Hilfsläufer 14 über die beiden umlaufenden Seile 16a, 16b im Wesentlichen synchron aus dem Hangar 3 zur Landefläche 1 entlang der jeweiligen Schiene 6, 8 bewegt. Zum Antrieb der beiden Seile 16a, 16b dient jeweils eine Winde 27a, 27b, die im oberen Bereich der Stirnseite 4 des Hangars 3 angeordnet sind. Die Winden 27a, 27b sind von einem gemeinsamen (nicht gezeigten) Hydromotor synchron antreibbar, so dass die beiden Läufer 14, 26 synchron zueinander entlang der Schienen 6, 8 bewegbar sind.

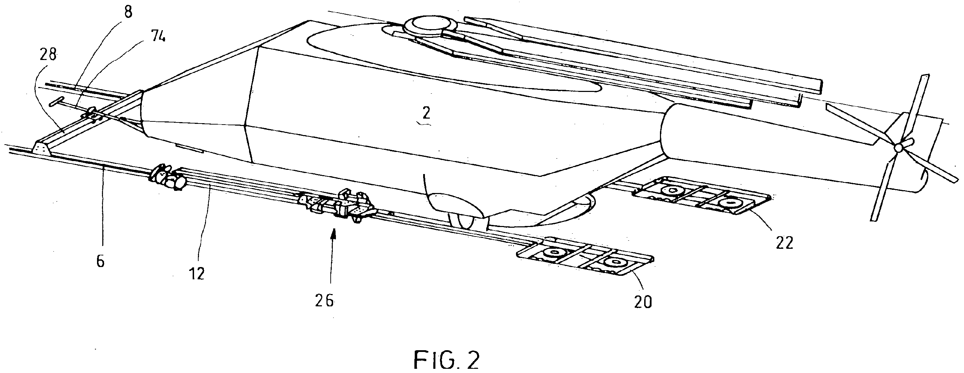

Figur 2 zeigt den größten Teil des erfindungsgemäßen Luftfahrzeug-Transfersystems in einer perspektivischen Ansicht von der Seite der Hauptschiene 6 aus gesehen. Der Hauptläufer 26 ist am Ende seiner Bewegung entlang der Hauptschiene 6 dargestellt, wobei die an ihm befestigte Brücke 12 parallel zur Hauptschiene 6 und in Fahrrichtung hinter dem Hauptläufer 26 mitgenommen wurde.

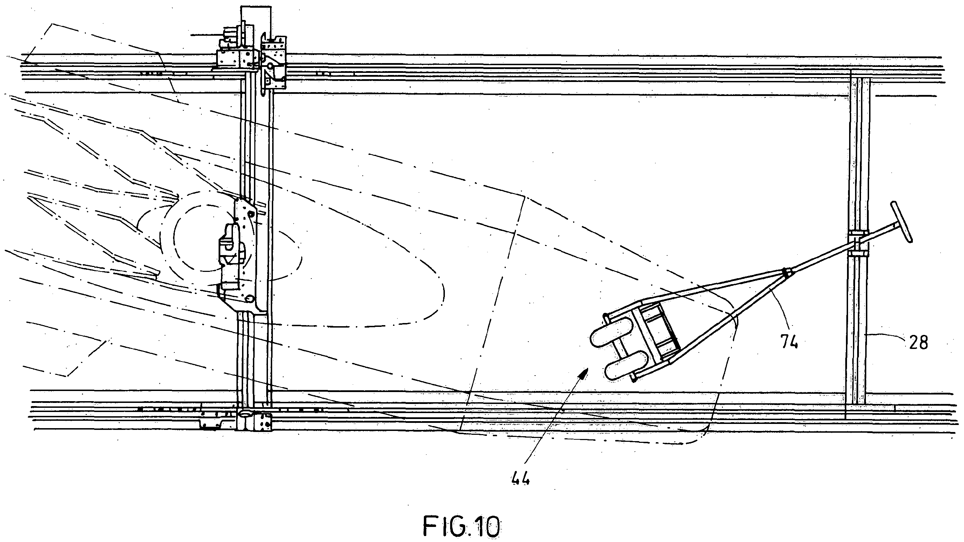

Eine Steuerbrücke 28, die etwa quer zu den Schienen 6, 8 verläuft, wird ebenfalls über die beiden umlaufenden Seile 16a, 16b entlang der Schienen 6, 8 bewegt. Wenn die Brücke 12 neben vor dem Helikopter 2 positioniert ist, und wenn die Steuerbrücke 28 vor dem Helikopter 2 positioniert ist, wird ein drehbares Vorderradpaar 44 (vgl. Figur 10) über eine Deichsel 74 an die Steuerbrücke 28 gekoppelt und die Brücke 12 nach außen verschwenkt.

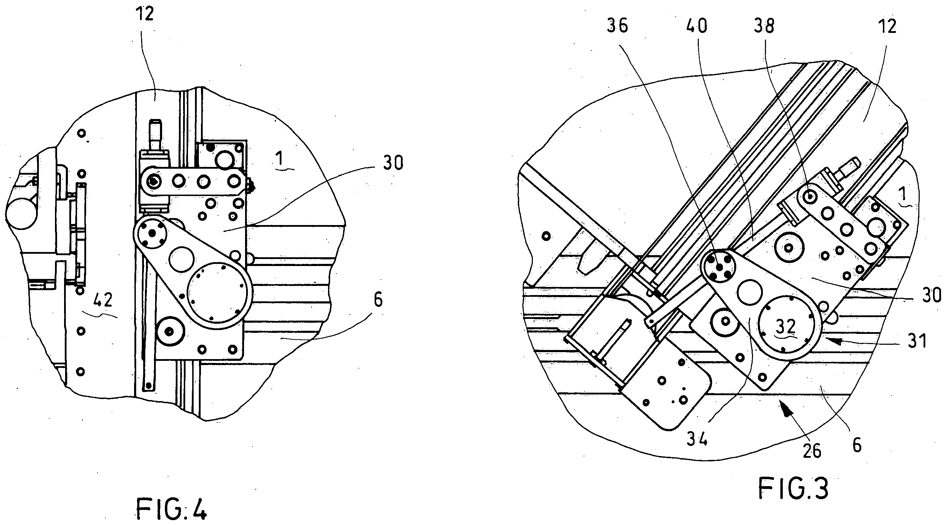

Figur 3 zeigt einen Ausschnitt des Luftfahrzeug-Transfersystems während des Verschwenkens der Brücke 12 in einer Draufsicht. Die Brücke 12, von der in Figur 3 nur ein kleinerer Teil gezeigt ist, ist in einer Brückenführung 30 etwa parallel zur Landefläche 1 verschiebbar aufgenommen, während die Brückenführung 30 schwenkbar am Hauptläufer 26 befestigt ist.

An der Oberseite des Hauptläufers 26 ist ein Drehzapfen 32 vorgesehen, der sich etwa senkrecht von der Landefläche 1 weg nach oben erstreckt und von dem in Figur 3 die obere Stirnfläche dargestellt ist. Der Drehzapfen 32 bildet ein Schwenkgelenk 31 über das die Brückenführung 30 etwa parallel zur Landefläche 1 schwenkbar aufgenommen ist.

Am oberen Endabschnitt des Drehzapfens 32 ist ein Verbindungsteil 34 befestigt, das mit dem Hauptläufer 26 fest verbunden ist und sich etwa parallel zur Landefläche 1 vom Drehzapfen 32 weg erstreckt. Das Verbindungsteil 34 kragt um etwa 45 Grad zur Hauptschiene 6 zu ihrer von der Hilfsschiene 8 abgewandten äußeren Seite. Am vom Drehzapfen 32 entfernten Endabschnitt des Verbindungsteils 34 ist eine erste Spindelaufnahme über ein Drehgelenk 36 befestigt. Ein Endabschnitt einer etwa parallel zur Landefläche 1 angeordneten Spindel 40 ist an einer zweiten Spindelaufnahme befestigt. Diese ist über ein Drehgelenk 38 verschwenkbar an der Brückenführung 30 befestigt.

Zum Verschwenken der Brücke 12 wird die Spindel 40 über eine Handkurbel oder über eine akkubetriebene Drehvorrichtung (beide nicht gezeigt) gedreht, wodurch die Spindel 40 durch die Spindelaufnahme bzw. das Drehgelenk 36 bewegt wird, und sich somit das Drehgelenk 38 auf das Drehgelenk 36 zu bewegt. Dadurch wird die Brückenführung 30 und somit die Brücke 12 von einer Ausgangslage parallel zur Hauptschiene 6 um 90° nach außen, d. h. weg vom Helikopter 2 verschwenkt. Figur 3 zeigt eine Zwischenstellung der Schwenkbewegung.

Figur 4 zeigt einen Ausschnitt des Luftfahrzeug-Transfersystems am Ende des Verschwenkens der Brücke 12 in einer Draufsicht. Dabei ist die Brückenführung 30 und somit auch die Brücke 12 etwa senkrecht bzw. etwa rechtwinkelig zu den beiden Schienen 6, 8 und etwa parallel zur Landefläche 1 angeordnet.

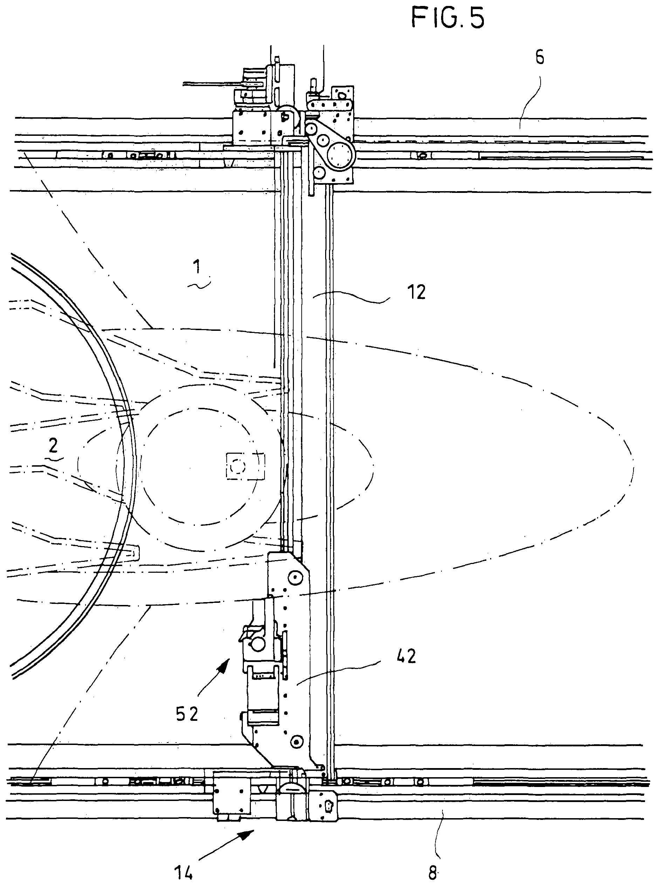

In den Figuren 4 und 5 ist ein Greiferläufer 42 gezeigt, der prinzipiell auf die gleiche Weise verschiebbar an die Brücke 12 gekoppelt ist, wie diese an die Brückenführung 30 verschiebbar gekoppelt ist. Somit kann der Greiferläufer 42 entlang der Brücke 12 verfahren werden.

In einem nächsten Arbeitsschritt wird die Brücke 12 mit dem daran befestigten Greiferläufer 42 in Richtung zur zweiten Schiene 8 bewegt. Dies geschieht durch Verschieben der Brücke 12 in der Brückenführung 30.

Figur 5 zeigt das Luftfahrzeug-Transfersystem am Ende der Verschiebebewegung der Brücke 12 in einer Draufsicht. Dabei hat sich der Endabschnitt der Brücke 12, an dem der Greiferläufer 42 festgesetzt ist, von der Hauptschiene 6 bzw. dem Hauptläufer 26 zur zweiten Schiene 8 bzw. zum Hilfsläufer 14 bewegt. Diese Bewegung führte durch einen freien Bereich, der zwischen der Unterseite des Helikopters 2 und der Landefläche 1 bzw. zwischen den Vorderrädern 44 des Helikopters 2 und seinen Hinterrädern (beide in Figur 5 nicht gezeigte) gebildet ist.

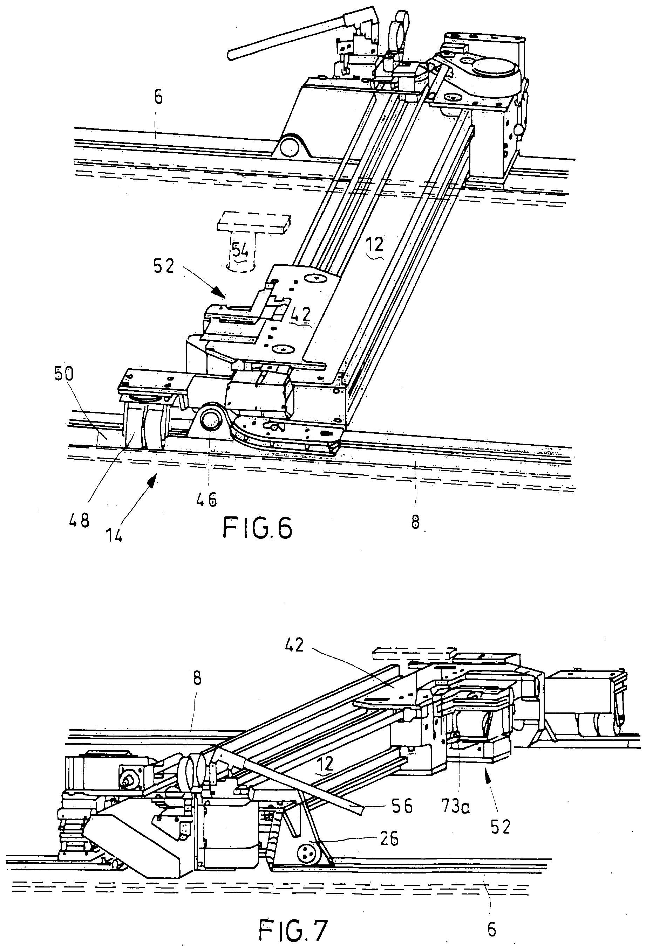

Figur 6 zeigt einen Ausschnitt des Luftfahrzeug-Transfersystems entsprechend der Situation in Figur 5 in einer perspektivischen Ansicht. Dabei ist ein Brückenzapfen 46, der stirnseitig an der Brücke 12 befestigt ist, durch eine kreisförmige Ausnehmung des Hilfsläufers 14 geführt. Somit ist die Brücke 12 in Längsrichtung der Schienen 6, 8 formschlüssig mit dem Hilfsläufer 14 verbunden.

Weiterhin ist ein doppeltes Stützrad 48 am Endabschnitt der Brücke 12 befestigt. Nachdem das Stützrad 48 den Bereich von der Hauptschiene 6 zur zweiten Schiene 8 überrollt hat, ist es über einem ebenen Bereich 50 des Hilfsläufers 14 angeordnet. Damit kann es nun synchron zum Hilfsläufer 14 im Folgenden Ablauf entlang der Schiene 8 bewegt werden.

An den Greiferläufer 42 ist ein Greifer 52 gekoppelt, der in den folgenden Schritten mit einen Zapfen 54 des Helikopters 2 verbunden wird.

Im Folgenden wird eine Höheneinstellvorrichtung des Greifers 52 mit Bezug zum Greiferläufer 42 beschrieben:
Figur 7 zeigt einen Ausschnitt des Luftfahrzeug-Transfersystems in einer perspektivischen Darstellung. Dabei ist - anders als in der Figur 6 - im Vordergrund der Hauptläufer 26 auf der Hauptschiene 6 dargestellt, während im Hintergrund der Greifer 52 mit dem Greiferläufer 42 gezeigt ist. Dazwischen erstreckt sich die Brücke 12.

Am Hauptläufer 26 ist eine hydraulische Handpumpe mit einem Hebel 56 vorgesehen. Die Handpumpe ist mit einem Ringraum eines Hydraulikzylinders verbunden, der an der Brücke 12 parallel zu dieser befestigt ist. Eine Kolbenstange des Hydraulikzylinders durchdringt den Ringraum und den Deckel. Ein Bodenraum des Hydraulikzylinders ist mit kompressiblem Gas gefüllt.

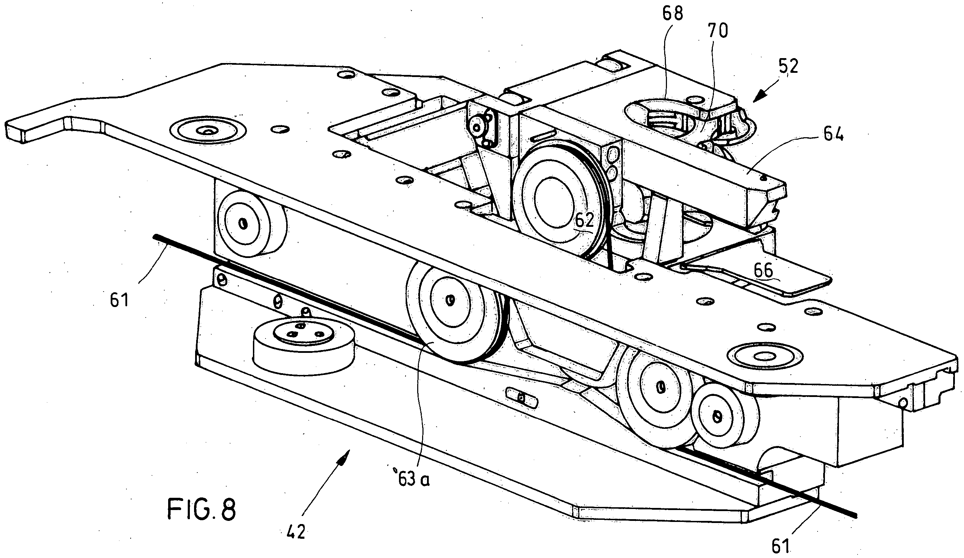

An einem den Hydraulikzylinder abgewandten Endabschnitt der Kolbenstange ist eine Umlenkrolle befestigt. Über diese verläuft ein Seil 61 (vgl. Figur 8), das einerseits direkt oder indirekt mit dem hauptläuferseitigen Endabschnitt der Brücke 12 verbunden ist, und andererseits am hilfsläuferseitigen Endabschnitt der Brücke 12 befestigt ist. Ein Hauptabschnitt des Seils 61 verläuft entlang und parallel zur Brücke 12 (vgl. Figur 8).

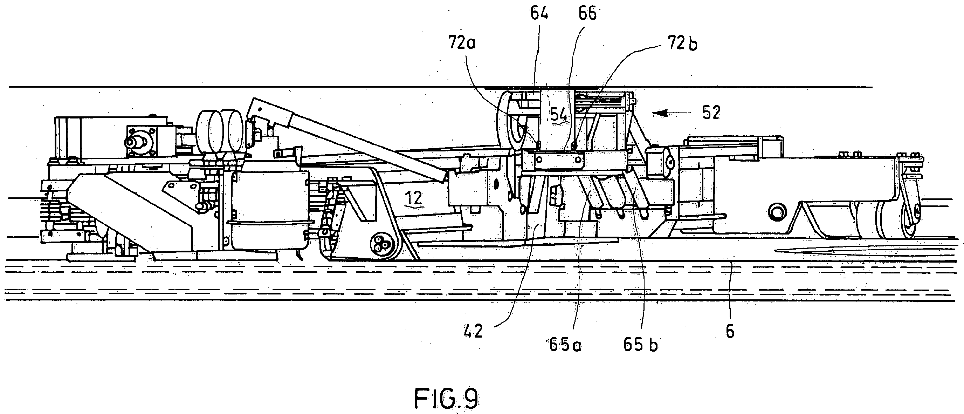

Figur 8 zeigt einen Ausschnitt des Luftfahrzeug-Transfersystems in einer perspektivischen Darstellung. Dabei ist der Greiferläufer 42 mit dem Greifer 52 und mit dem Hauptabschnitt des Seils 61 gezeigt. Im Bereich des Greiferläufers 42 bzw. des Greifers 52 verläuft das Seil 61 über drei Umlenkrollen 62, 63a, 63b. Die Umlenkrolle 62 ist am Greifer 52 befestigt, während die beiden seitlichen Umlenkrollen 63a, 63b am Greiferläufer 42 befestigt sind. Die drei Umlenkrollen 62, 63a, 63b sind in Verfahrrichtung des Greiferläufers 42 mit Bezug zur Brücke 12 fluchtend zueinander angeordnet. Dadurch ist der Greifer 52 mit Bezug zum Greiferläufer 42 gegen die Kraft zweier Federbeine 65a, 65b (vgl. Figur 9) niedergehalten. Eine Bewegung des Greiferläufers 42 entlang der Brücke 12 und somit entlang des Seils 61 ist auf Grund der drei Umlenkrollen 62, 63a, 63b widerstandsarm möglich, wobei die Höheneinstellung des Greifers 52 unverändert bleibt.

In einem nächsten Arbeitsschritt wird der Hebel 56 (vgl. Figur 7) der Handpumpe betätigt, wodurch der Ringraum des Hydraulikzylinders mit Druckmittel gefüllt wird und die Kolbenstange mit der Umlenkrolle in Richtung zur Brücke 12 gegen den Gasdruck im Bodenraum eingefahren bzw. eingezogen wird. Dadurch wird der Hauptabschnitt des Seils 61 (vgl. Figur 8) nachgelassen, so dass die Federbeine 65a, 65b den Greifer 52 nach oben drücken können. Auf diese Weise wird eine erste vergleichsweise grobe Höheneinstellung des Greifers 52 mit Bezug zum Zapfen 54 vorgenommen.

In einem nächsten Arbeitsschritt wird der Greiferläufer 42 mit dem Greifer 52 entgegen der vorherigen Verfahrrichtung der Brücke 12 in Richtung zum Hauptläufer 26 bis zu einer Position verfahren, bei der ein Anschlagabschnitt 64 des Greifers 52 entlang der Schienenlängsachsen mit dem Zapfen 54 des Helikopters 2 fluchtet.

Danach werden die beiden Läufer 14, 26 mit der Brücke 12 entlang den Schienen 6, 8 verfahren, bis der Zapfen 54 an den Anschlagabschnitt 64 des Greifers 52 anschlägt.

Der Greifer 52 hat eine etwa waagrechte Anschlagplatte 66, die nun stirnseitig unterhalb des Zapfens 54 angeordnet ist.

In einem nächsten Arbeitsschritt wird eine zweite und letzte Höheneinstellung vorgenommen, bei der der Greifer 52 über die hydraulische Handpumpe bzw. über die Federbeine 65a, 65b angehoben wird, bis die Anschlagplatte 66 an der unteren Stirnseite des Zapfens 54 anschlägt. Damit ist die Höhe des Greifers 52 mit Bezug zum Zapfen 54 optimal eingestellt.

Figur 9 zeigt einen Ausschnitt des Luftfahrzeug-Transfersystems in einer seitlichen perspektivischen Ansicht. Die Ansicht mit Blickrichtung von der Hauptschiene 6 zur zweiten Schiene 8 zeigt das Transfersystem am Ende des zuvor beschriebenen Arbeitsschrittes.

In einem darauf folgenden Arbeitsschritt wird der Greiferläufer 42 mit dem Greifer 52 entlang der Brücke 12 in Richtung zur Hauptschiene 6 bewegt, bis der Zapfen 54 in einer entsprechenden U-förmigen Ausnehmung 68 (vgl. Figur 8) des Greifers 52 aufgenommen ist. Schließlich wird ein bogenförmiger Verriegelungsabschnitt 70 in die in Figur 8 gezeigte Position gebracht, so dass der (in Figur 8 nicht gezeigte) Zapfen 54 vom Greifer 52 umgriffen ist.

Am unteren Endabschnitt des Zapfens 54 sind zwei gegenüber liegende Stifte 72a, 72b angeordnet, die sich mit Bezug zum Zapfen 54 radial nach außen erstrecken (vgl. Figur 9). Wenn der Zapfen 54 vom Rand der Ausnehmung 68 und vom Verriegelungsabschnitt 70 des Greifers 52 umgriffen ist, sind die beiden Stifte 72a, 72b in entsprechenden Ausnehmungen des Greifers 52 aufgenommen, von denen in Figur 7 eine Ausnehmung 73a gezeigt ist. Durch ein vergleichsweise geringfügiges Absenken des Greifers 52 verrasten die beiden Stifte 72a, 72b mit den Ausnehmungen 73a des Greifers 52. Das Absenken erfolgt durch Abbau des Drucks in dem Ringraum des Hydraulikzylinders, wodurch die Kolbenstange und die Umlenkrolle durch den Gasdruck im Bodenraum ausgefahren werden. Dadurch wird das Seil 61 eingezogen und die Umlenkrolle 62 bewegt sich mit dem Greifer 52 gegen die Kraft der Federbeine 65a, 65b nach unten (vgl. Figur 8).

Figur 10 zeigt den größten Teil des Luftfahrzeug-Transfersystems in einer Draufsicht. Nach dem Ansetzen einer Deichsel 74 an dem beweglichen Vorderradpaar 44 des Helikopters 2 werden die von einem Hydromotor synchron angetriebenen Winden betrieben und so die Brücke 12 entlang der Schienen 6, 8 in Richtung zum Hangar 3 bewegt. Dabei nimmt das Transfersystem über den Greiferläufer 42, den Greifer 52 und den Zapfen 54 den Helikopter 2 mit. Eine Ausrichtung bzw. ein Lenken des Helikopters 2 erfolgt dabei über die Deichsel 74 und die Steuerbrücke 28.

## Patentansprüche

1. Luftfahrzeug-Transfersystem zur Überführung eines Luftfahrzeugs (2) in eine Parkposition mit einer ersten Schiene (6) und mit einer sich parallel zur ersten Schiene (6) erstreckenden, zweiten Schiene (8), mit einem auf der ersten Schiene (6) verfahrbaren Hauptläufer (26), an den eine Brücke (12) gekoppelt ist, die gegenüber dem Hauptläufer aus einer Position, in der sie parallel zur ersten Schiene angeordnet ist, in eine Position, in der sie senkrecht zur ersten Schiene (6) verläuft, verschwenkbar ist, und mit einem auf der zweiten Schiene (8) verfahrbaren Hilfsläufer (14), wobei die Brücke (12) nach der Verschwenkung in eine Position, in der sie senkrecht zu den Schienen (6, 8) verläuft, quer zur Längsrichtung der Schienen (6, 8) in Richtung zur zweiten Schiene (8) verschiebbar und mit einem Endabschnitt mit dem Hilfsläufer koppelbar ist, **dadurch gekennzeichnet, dass** die Brücke (12) aus der Position, in der sie parallel zur ersten Schiene (6) angeordnet ist, nach außen von dem Raum zwischen den beiden Schienen (6, 8) weg gegenüber dem Hauptläufer (26) verschwenkbar ist.

2. Luftfahrzeug-Transfersystem nach Patentanspruch 1 mit einer Brückenführung (30), die über ein Schwenkgelenk (31) mit dem Hauptläufer (26) verbunden ist, und in der die Brücke (12) abschnittsweise aufgenommen und entlang ihrer Längsachse über eine von einem Schneckenrad antreibbare Zahnstange verschiebbar gelagert ist.

3. Luftfahrzeug-Transfersystem nach Patentanspruch 2 mit einem Spindeltrieb (36, 38, 40), der mit der Brückenführung (30) und mit dem Hauptläufer (26) über je ein Drehgelenk (36, 38) verbunden ist.

4. Luftfahrzeug-Transfersystem nach einem der vorhergehenden Patentansprüche , wobei der Endabschnitt der Brücke (12) einen Brückenzapfen (46) hat, der in eine Ausnehmung des Hilfsläufers (14) einführbar ist.

5. Luftfahrzeug-Transfersystem nach einem der vorhergehenden Patentansprüche mit einem am Endabschnitt der Brücke (12) befestigten Stützrad (48), wobei der Hilfsläufer (14) einen ebenen Bereich (50) hat, auf den das Stützrad (48) fahrbar ist.

6. Luftfahrzeug-Transfersystem nach einem der vorhergehenden Patentansprüche mit zwei von einem Hydromotor synchron antreibbare Winden (27a, 27b), die jeweils über biegeschlaffe Zugmittel mit einem Läufer (14, 26) verbunden sind.

7. Luftfahrzeug-Transfersystem nach einem der vorhergehenden Patentansprüche, wobei ein Greiferläufer (42) an der Brücke (12) befestigt und entlang dieser über einen Zahnriemen verfahrbar ist.

8. Luftfahrzeug-Transfersystem nach Patentanspruch 7, wobei der Greiferläufer (42) einen Greifer (52) hat, der mit einem Zapfen (54) des Luftfahrzeugs (2) verbindbar ist.

9. Luftfahrzeug-Transfersystem nach Patentanspruch 8, wobei zwischen dem Greifer (52) und dem Greiferläufer (42) eine Höhenverstellung (56, 58, 59, 60, 61, 62, 63a, 63b, 65a, 65b) zur Einstellung des Greifers (52) entlang oder parallel zu einer Längsachse des Zapfens (54) vorgesehen ist.

10. Luftfahrzeug-Transfersystem nach Patentanspruch 9, wobei die Höhenverstellung (56, 58, 59, 60, 61, 62, 63a, 63b, 65a, 65b) ein biegeschlaffes Zugmittel (61) hat, über das der Greifer (52) gegen die Kraft zweier zwischen dem Greiferläufer (42) und dem Greifer (52) angeordneter Federbeine (65a, 65b) absenkbar ist.

11. Luftfahrzeug-Transfersystem nach Patentanspruch 10, wobei ein erster Endabschnitt des Zugmittels (61) am Endabschnitt der Brücke (12) befestigt ist, und wobei am Greifer (52) eine Umlenkrolle (62) und am Greiferläufer (42) zwei Umlenkrollen (63a, 63b) vorgesehen sind, an denen das Zugmittel (61) anliegt, und wobei ein zweiter Endabschnitt des Zugmittels (61) über einen Hydraulikzylinder entlang der Brücke bewegbar ist.

12. Luftfahrzeug-Transfersystem nach Patentanspruch 11, wobei der Hydraulikzylinder einen von einem Kolben begrenzten Ringraum hat, der von einer Kolbenstange durchsetzt ist, an deren vom Kolben abgewandten Endabschnitt eine Umlenkrolle befestigt ist, und wobei der zweite Endabschnitt des Zugmittels über die Umlenkrolle geführt und an dem Hydraulikzylinder oder am Hauptläufer (26) befestigt ist.

13. Luftfahrzeug-Transfersystem nach Patentanspruch 6 , wobei die beiden Winden (27a, 27b) an einem oberen Abschnitt einer etwa quer zu den beiden Schienen angeordneten Wand (4) eines Hangars (3) befestigt sind, und wobei zwei Umlenkrollen (24a, 24b) an einem unteren Abschnitt der Wand (4) angeordnet sind, und wobei zwei Paare von Umlenkrollen (20, 22) vorhanden sind und wobei die Zugmittel über die Umlenkrollen (20, 22, 24a, 24b) geführt sind.

14. Verfahren zum Betreiben eines Luftfahrzeug-Transfersystems nach einem der vorhergehenden Patentansprüche mit den Schritten:
- Bewegen der Brücke (12) in die Nähe des Luftfahrzeugs (2);
- Schwenken der Brücke (12) nach außen weg vom Luftfahrzeug (2);
- zumindest abschnittsweises Verschieben der Brücke (12) unter das Luftfahrzeug (2);
- Koppeln der Brücke mit dem Luftfahrzeug; und
- Bewegen der Brücke (12) mit dem Luftfahrzeug (2) zur Parkposition.

15. Verfahren nach Patentanspruch 14, wobei das Koppeln der Brücke mit dem Luftfahrzeug aus den Schritten:
- Bewegen des Greiferläufers (42) in Richtung zur Brückenführung (30);
- Bewegen der Brücke (12) in Richtung zum Zapfen (54);
- Einführen des Zapfens (54) in den Greifer (52) über ein Bewegen des Greiferläufers (42); und
- Schließen des Greifers (52)
besteht.

16. Verfahren nach den Patentansprüchen 14 und 15, wobei das Schwenken der Brücke (12) und / oder das Verschieben der Brücke (12) und / oder das Bewegen des Greiferläufers (42) über eine Handkurbel oder einen akkubetriebenen tragbaren Elektromotor erfolgen.

17. Verfahren nach einem der Patentansprüche 14 bis 16, wobei ein Ansetzen einer Deichsel (74) an ein schwenkbares Rad (44) des Luftfahrzeugs (2) und an einer Steuerbrücke (28) erfolgt, und wobei während des Bewegens der Brücke (12) mit dem Luftfahrzeug (2) zur Parkposition ein Steuern des Luftfahrzeugs (2) über die Steuerbrücke (28) und die Deichsel (74) erfolgt.

18. Verfahren nach Patentanspruch 15 oder 16, wobei nach dem Bewegen der Brücke (12) in Richtung zum Zapfen (54) ein Aufwärtsbewegen des Greifers (52) und nach dem Schließen des Greifers (52) ein Abwärtsbewegen des Greifers (52) in Richtung der Längsachse des Zapfens (54) über die Höhenverstellung (56, 58, 59, 60, 61, 62, 63a, 63b, 65a, 65b) erfolgt, wobei beim Abwärtsbewegen des Greifers (52) Stifte (72a, 72b) des Zapfens (54) mit dem Greifer (52) verrasten.

19. Verfahren nach einem der Patentansprüche 15 bis 18, wobei das Bewegen der Brücke (12) in Richtung zum Zapfen (54) und/oder das Aufwärtsbewegen des Greifers (52) bis zu einem jeweiligen Anschlag (64, 66) erfolgen.

20. Verfahren nach einem der Patentansprüche 15 bis 19, wobei nach dem Verschieben der Brücke (12) unter das Luftfahrzeug (2) ein Voreinstellen der Höhe des Greifers (52) in Richtung der Längsachse des Zapfens (54) über die Höhenverstellung (56, 58, 59, 60, 61, 62, 63a, 63b, 65a, 65b) erfolgt.

21. Verfahren nach einem der Patentansprüche 14 bis 20, wobei bei dem Verschieben der Brücke (12) unter das Luftfahrzeug (2) ein Durchführen des Endabschnitts der Brücke (12) unter dem Luftfahrzeug (2) hindurch erfolgt und wobei nach dem Durchführen des Endabschnitts der Brücke (12) ein Koppeln des Endabschnitts mit dem Hilfsläufer (14) erfolgt.

22. Verfahren nach einem der Patentansprüche 14 bis 21, wobei vor dem Bewegen des Transfersystems in die Nähe des Luftfahrzeugs ein Ausrichten der Brücke entlang der Schiene erfolgt.

## Claims

1. Aircraft transfer system for transferring an aircraft (2) into a parked position, having a first rail (6) and having a second rail (8) extending parallel to the first rail (6), having a main runner (26) which is displaceable on the first rail (6) and to which a bridge (12) is coupled, said bridge (12) being pivotable with respect to the main runner from a position in which it is arranged parallel to the first rail into a position in which it extends perpendicularly to the first rail (6), and having an auxiliary runner (14) which is displaceable on the second rail (8), wherein, after being pivoted into a position in which it extends perpendicularly to the rails (6, 8), the bridge (12) is displaceable transversely to the longitudinal direction of the rails (6, 8) in the direction of the second rail (8) and is able to be coupled to the auxiliary runner by way of an end portion, **characterized in that** the bridge (12) is pivotable outwards, from the position in which it is arranged parallel to the first rail (6), away from the space between the two rails (6, 8) with respect to the main runner (26).

2. Aircraft transfer system according to Claim 1, having a bridge guide (30) which is connected to the main runner (26) via a pivot joint (31) and in which part of the bridge (12) is received and is mounted so as to be displaceable along its longitudinal axis via a rack which is able to be driven by a worm wheel.

3. Aircraft transfer system according to Claim 2, having a spindle drive (36, 38, 40) which is connected to the bridge guide (30) and to the main runner (26) via a respective pivot joint (36, 38).

4. Aircraft transfer system according to one of the preceding claims, wherein the end portion of the bridge (12) has a bridge peg (46) which is able to be introduced into a cutout in the auxiliary runner (14).

5. Aircraft transfer system according to one of the preceding claims, having a support wheel (48) fastened to the end portion of the bridge (12), wherein the auxiliary runner (14) has a flat region (50) on which the support wheel (48) is able to travel.

6. Aircraft transfer system according to one of the preceding claims, having two winches (27a, 27b) which are drivable synchronously by a hydraulic motor and are each connected to a runner (14, 26) via flexible traction means.

7. Aircraft transfer system according to one of the preceding claims, wherein a gripper runner (42) is fastened to the bridge (12) and is displaceable along the latter by a toothed belt.

8. Aircraft transfer system according to Claim 7, wherein the gripper runner (42) has a gripper (52) which is connectable to a peg (54) on the aircraft (2).

9. Aircraft transfer system according to Claim 8, wherein, between the gripper (52) and the gripper runner (42), a height adjustment means (56, 58, 59, 60, 61, 62, 63a, 63b, 65a, 65b) for setting the gripper (52) along or parallel to a longitudinal axis of the peg (54) is provided.

10. Aircraft transfer system according to Claim 9, wherein the height adjustment means (56, 58, 59, 60, 61, 62, 63a, 63b, 65a, 65b) has a flexible traction means (61) via which the gripper (52) is able to be lowered counter to the force of two spring struts (65a, 65b) arranged between the gripper runner (42) and the gripper (52).

11. Aircraft transfer system according to Claim 10, wherein a first end portion of the traction means (61) is fastened to the end portion of the bridge (12), and wherein one deflection roller (62) is provided on the gripper (52) and two deflection rollers (63a, 63b) are provided on the gripper runner (42), the traction means (61) bearing against said deflection rollers, and wherein a second end portion of the traction means (61) is movable along the bridge via a hydraulic cylinder.

12. Aircraft transfer system according to Claim 11, wherein the hydraulic cylinder has an annular space bounded by a piston, said annular space being passed through by a piston rod, to the end portion of which that is remote from the piston a deflection roller is fastened, and wherein the second end portion of the traction means is guided over the deflection roller and is fastened to the hydraulic cylinder or to the main runner (26).

13. Aircraft transfer system according to Claim 6, wherein the two winches (27a, 27b) are fastened to an upper portion of a wall (4), arranged approximately transversely to the two rails, of a hangar (3), and wherein two deflection rollers (24a, 24b) are arranged on a lower portion of the wall (4), and wherein two pairs of deflection rollers (20, 22) are provided, and wherein the traction means are guided over the deflection rollers (20, 22, 24a, 24b).

14. Method for operating an aircraft transfer system according to one of the preceding claims, having the steps of:
- moving the bridge (12) into the vicinity of the aircraft (2);
- pivoting the bridge (12) outwards away from the aircraft (2);
- displacing at least part of the bridge (12) under the aircraft (2);
- coupling the bridge to the aircraft; and
- moving the bridge (12) with the aircraft (2) to the parked position.

15. Method according to Claim 14, wherein the coupling of the bridge to the aircraft consists of the steps of:
- moving the gripper runner (42) in the direction of the bridge guide (30);
- moving the bridge (12) in the direction of the peg (54);
- introducing the peg (54) into the gripper (52) via a movement of the gripper runner (42); and
- closing the gripper (52).

16. Method according to Claims 14 and 15, wherein the pivoting of the bridge (12) and/or the displacement of the bridge (12) and/or the movement of the gripper runner (42) take place via a hand crank or a battery-powered portable electric motor.

17. Method according to one of Claims 14 to 16, wherein a drawbar (74) is attached to a pivotable wheel (44) of the aircraft (2) and to a control bridge (28), and wherein, during the movement of the bridge (12) with the aircraft (2) to the parked position, the aircraft (2) is controlled via the control bridge (28) and the drawbar (74).

18. Method according to Claim 15 or 16, wherein, after the bridge (12) has been moved in the direction of the peg (54), the gripper (52) is moved upwards, and after the gripper (52) has been closed, the gripper (52) is moved downwards in the direction of the longitudinal axis of the peg (54) via the height adjustment means (56, 58, 59, 60, 61, 62, 63a, 63b, 65a, 65b), wherein, during the downward movement of the gripper (52), pins (72a, 72b) of the peg (54) interlock with the gripper (52).

19. Method according to one of Claims 15 to 18, wherein the movement of the bridge (12) in the direction of the peg (54) and/or the upward movement of the gripper (52) take place as far as a respective stop (64, 66).

20. Method according to one of Claims 15 to 19, wherein, after the bridge (12) has been displaced under the aircraft (2), the height of the gripper (52) is preset in the direction of the longitudinal axis of the peg (54) via the height adjustment means (56, 58, 59, 60, 61, 62, 63a, 63b, 65a, 65b).

21. Method according to one of Claims 14 to 20, wherein, while the bridge (12) is being displaced under the aircraft (2), the end portion of the bridge (12) is passed through under the aircraft (2), and wherein, after the end portion of the bridge (12) has been passed through, the end portion is coupled to the auxiliary runner (14).

22. Method according to one of Claims 14 to 21, wherein, before the transfer system is moved into the vicinity of the aircraft, the bridge is aligned along the rail.

## Revendications

1. Système de transfert d'un aéronef pour transférer un aéronef (2) dans une position de parking avec un premier rail (6) et avec un deuxième rail (8) s'étendant parallèlement au premier rail (6), avec un chariot principal (26) déplaçable sur le premier rail (6), auquel est couplé un pont (12) qui peut pivoter par rapport au chariot principal d'une position, dans laquelle il est disposé parallèlement au premier rail, à une position, dans laquelle il est disposé perpendiculairement au premier rail (6), et avec un chariot auxiliaire (14) déplaçable sur le deuxième rail (8), dans lequel le pont (12) peut, après le pivotement dans une position, dans laquelle il s'étend perpendiculairement aux rails (6, 8), être déplacé transversalement à la direction longitudinale des rails (6, 8) en direction du deuxième rail (8) et être couplé par une partie d'extrémité au chariot auxiliaire, **caractérisé en ce que** le pont (12) peut pivoter par rapport au chariot principal (26) de la position, dans laquelle il est disposé parallèlement au premier rail (6), vers l'extérieur à partir de l'espace situé entre les deux rails (6, 8).

2. Système de transfert d'aéronef selon la revendication 1 avec un guidage de pont (30), qui est relié au chariot principal (26) par une articulation pivotante (31), et dans lequel le pont (12) est logé en partie et est monté de façon déplaçable le long de son axe longitudinal au moyen d'une crémaillère entraînée par une roue à vis sans fin.

3. Système de transfert d'aéronef selon la revendication 2, avec une commande à broche (36, 38, 40), qui est reliée au guidage de pont (30) et au chariot principal (26) respectivement par le bias d'une articulation tournante (36, 38).

4. Système de transfert d'aéronef selon l'une quelconque des revendications précédentes, dans lequel la partie d'extrémité du pont (12) comporte un tourillon de pont (46), qui est insérable dans un évidement du chariot auxiliaire (14).

5. Système de transfert d'aéronef selon l'une quelconque des revendications précédentes avec une roue d'appui (48) fixée à la partie d'extrémité du pont (12), dans lequel le chariot auxiliaire (14) présente une région plane (50), sur laquelle la roue d'appui (48) peut rouler.

6. Système de transfert d'aéronef selon l'une quelconque des revendications précédentes avec deux treuils (27a, 27b) pouvant être entraînés de façon synchronisée par un moteur hydraulique, qui sont reliés à un chariot (14, 26) respectivement par le bias de moyens de traction flexibles.

7. Système de transfert d'aéronef selon l'une quelconque des revendications précédentes, dans lequel un chariot d'accrochage (42) est fixé au pont (12) et est déplaçable le long de celui-ci au moyen d'une courroie dentée.

8. Système de transfert d'aéronef selon la revendication 7, dans lequel le chariot d'accrochage (42) comporte un accrocheur (52), qui peut être relié à un tourillon (54) de l'aéronef (2).

9. Système de transfert d'aéronef selon la revendication 8, dans lequel il est prévu entre l'accrocheur (52) et le chariot d'accrochage (42) un réglage de hauteur (56, 58, 59, 60, 61, 62, 63a, 63b, 65a, 65b) pour le réglage de l'accrocheur (52) le long de ou parallèlement à un axe longitudinal du tourillon (54).

10. Système de transfert d'aéronef selon la revendication 9, dans lequel le réglage de hauteur (56, 58, 59, 60, 61, 62, 63a, 63b, 65a, 65b) comporte un moyen de traction flexible (61), par lequel l'accrocheur (52) peut être abaissé contre la force de deux jambes de force à ressort (65a, 65b) montées entre le chariot d'accrochage (42) et l'accrocheur (52).

11. Système de transfert d'aéronef selon la revendication 10, dans lequel une première partie d'extrémité du moyen de traction (61) est fixée à la partie d'extrémité du pont (12), et dans lequel il est prévu un rouleau de déviation (62) sur l'accrocheur (52) et deux rouleaux de déviation (63a, 63b) sur le chariot d'accrochage (42), sur lesquels le moyen de traction (61) est appliqué, et dans lequel une deuxième partie d'extrémité du moyen de traction (61) est déplaçable le long du pont au moyen d'un cylindre hydraulique.

12. Système de transfert d'aéronef selon la revendication 11, dans lequel le cylindre hydraulique comprend une chambre annulaire limitée par un piston, laquelle est traversée par une tige de piston, dont la partie d'extrémité éloignée du piston est munie d'un rouleau de déviation, et dans lequel la deuxième partie d'extrémité du moyen de traction est guidée sur le rouleau de déviation et est fixée au cylindre hydraulique ou au chariot principal (26).

13. Système de transfert d'aéronef selon la revendication 6, dans lequel les deux treuils (27a, 27b) sont fixés à une partie supérieure d'une paroi (4) d'un hangar (3) placée environ transversalement aux deux rails, et dans lequel deux rouleaux de déviation (24a, 24b) sont disposés sur une partie inférieure de la paroi (4), et dans lequel il se trouve deux paires de rouleaux de déviation (20, 22) et dans lequel les moyens de traction sont guidés sur les rouleaux de déviation (20, 22, 24a, 24b).

14. Procédé de commande d'un système de transfert d'aéronef selon l'une quelconque des revendications précédentes, comprenant les étapes suivantes:
- déplacement du pont (12) à proximité de l'aéronef (2);
- pivotement du pont (12) vers l'extérieur à l'écart de l'aéronef (2);
- glissement au moins partiel du pont (12) en dessous de l'aéronef (2);
- couplage du pont à l'aéronef; et
- déplacement du pont (12) avec l'aéronef (2) jusqu'à la position de parking.

15. Procédé selon la revendication 14, dans lequel le couplage du pont à l'aéronef se compose des étapes suivantes:
- déplacement du chariot d'accrochage (42) en direction du guidage de pont (30);
- déplacement du pont (12) en direction du tourillon (54);
- introduction du tourillon (54) dans l'accrocheur (52) par un mouvement du chariot d'accrochage (42); et
- fermeture de l'accrocheur (52).

16. Procédé selon les revendications 14 et 15, dans lequel le pivotement du pont (12) et/ou le déplacement du pont (12) et/ou le mouvement du chariot d'accrochage (42) sont effectués au moyen d'une manivelle ou d'un moteur électrique portatif fonctionnant sur batterie.

17. Procédé selon l'une quelconque des revendications 14 à 16, dans lequel on effectue l'attelage d'un timon (74) à une roue pouvant pivoter (44) de l'aéronef (2) et à un pont de commande (28), et dans lequel on effectue une commande de l'aéronef (2) au moyen du pont de commande (28) et du timon (74) pendant le mouvement du pont (12) avec l'aéronef (2) jusqu'à la position de parking.

18. Procédé selon la revendication 15 ou 16, dans lequel, après le déplacement du pont (12) en direction du tourillon (54), on effectue un mouvement ascendant de l'accrocheur (52) et, après la fermeture de l'accrocheur (52), on effectue un mouvement descendant de l'accrocheur (52) en direction de l'axe longitudinal du tourillon (54) au moyen du réglage de hauteur (56, 58, 59, 60, 61, 62, 63a, 63b, 65a, 65b), dans lequel, lors du mouvement descendant de l'accrocheur (52), des tiges (72a, 72b) du tourillon (54) se verrouillent avec l'accrocheur (52).

19. Procédé selon l'une quelconque des revendications 15 à 18, dans lequel le déplacement du pont (12) en direction du tourillon (54) et/ou le mouvement ascendant de l'accrocheur (52) sont effectués jusqu'à une butée respective (64, 66).

20. Procédé selon l'une quelconque des revendications 15 à 19, dans lequel, après le déplacement du pont (12) en dessous de l'aéronef (2), on effectue un préréglage de la hauteur de l'accrocheur (52) en direction de l'axe longitudinal du tourillon (54) au moyen du réglage de hauteur (56, 58, 59, 60, 61, 62, 63a, 63b, 65a, 65b).

21. Procédé selon l'une quelconque des revendications 14 à 20, dans lequel, lors du déplacement du pont (12) en dessous de l'aéronef (2), on effectue une introduction de la partie d'extrémité du pont (12) en dessous de l'aéronef (2) et dans lequel, après l'introduction de la partie d'extrémité du pont (12), on effectue un couplage de la partie d'extrémité avec le chariot auxiliaire (14).

22. Procédé selon l'une quelconque des revendications 14 à 21, dans lequel, avant le mouvement du système de transfert à proximité de l'aéronef, on opère un alignement du pont le long du rail.
